## Europäisches Patentamt

## European Patent Office

## Office européen des brevets

(19)

(11) Veröffentlichungsnummer: **0 016 994**
**B1**

(12) # EUROPÄISCHE PATENTSCHRIFT

(45) Veröffentlichungstag der Patentschrift:
**07.07.82**

(51) Int. Cl.³: **G 07 C 7/00**, B 60 K 37/00

(21) Anmeldenummer: **80101132.1**

(22) Anmeldetag: **06.03.80**

(54) **Fahrtschreiber für Kraftfahrzeuge.**

(30) Priorität: **02.04.79 DE 7909472 U**

(43) Veröffentlichungstag der Anmeldung:
**15.10.80 Patentblatt 80/21**

(45) Bekanntmachung des Hinweises auf die Patenterteilung:
**07.07.82 Patentblatt 82/27**

(84) Benannte Vertragsstaaten:
**AT FR GB**

(56) Entgegenhaltungen:
**FR-A-2 383 039**
**FR-A-2 384 420**

(73) Patentinhaber: **Kienzle Apparate GmbH,
Heinrich-Hertz-Strasse Postfach 1650,
D-7730 Villingen-Schwenningen (DE)**

(72) Erfinder: **Kuhn, Peter, Dr., Grimmelshausenstrasse 3,
D-7730 Villingen-Schwenningen (DE)**
Erfinder: **Zimmermann, Hans, Brückenstrasse 22,
D-7220 Villingen-Schwenningen (DE)**

Fahrtschreiber für Kraftfahrzeuge

Die Erfindung betrifft einen Fahrtschreiber für Kraftfahrzeuge mit einem Gehäuse und einem mit diesem gelenkig verbundenen Deckel, an welchem frontseitig eine im wesentlichen rechteckförmige Frontplatte ausgebildet ist und wobei die Schwenkachse des Deckels im Abstand von der Frontfläche der Frontplatte, und zwar parallel zu einem der Kantenpaare der Frontfläche, angeordnet ist, sowie mit Mitteln, die einen versenkten Einbau des Fahrtschreibers im Armaturenbrett eines Kraftfahrzeuges derart gestatten, dass sich die den Fahrtschreiber umgebenden frontseitigen Armaturenbrettkonturen bzw. Instrumentenfrontflächen ausserhalb einer Ebene befinden, deren Lage parallel zur Frontfläche des Fahrtschreibers durch die Schwenkachse bestimmt ist.

Eine derartige Anordnung eines Fahrtschreibers ist dann erforderlich, wenn der Fahrtschreiber, dessen Aufbau und Funktion als bekannt vorausgesetzt werden darf, einem Gestaltungstrend anzupassen ist, der hinsichtlich des Armaturenbretts bzw. der Instrumentenkonsole von Nutzfahrzeugen beispielsweise eine Einteilung in rechteckförmige Felder zur gegenseitigen optischen Abgrenzung einzelner Instrumente, Instrumentengruppen bzw. Bedienungsorgangruppen vorsieht. Dabei liegen die Frontflächen bzw. die Oberflächen dieser Felder im wesentlichen in ein und derselben Ebene und werden entweder von dem in geeigneter Weise ausgebildeten Armaturenbrett selbst oder von den Instrumenten zugeordneten Blenden bzw. Frontplatten gebildet.

Die Anpassung des Fahrtschreibers an eine derartige Armaturenbrettgestaltung ist, was die eigentliche Frontfläche des Fahrtschreibers anbelangt, verhältnismässig problemlos, da der Fahrtschreiber in seiner bisher üblichen Ausbildung als Rundinstrument lediglich mit einer geeigneten rechteckförmigen Frontplatte versehen werden muss, wobei für die anzuzeigenden Messgrössen nach wie vor kreisförmig angeordnete Skalen und eine kreisförmige Frontscheibe bestehen bleiben können.

Das herkömmliche bauliche Konzept des Fahrtschreibers ist aber für eine derartige Einbausituation insofern wenig geeignet, als zwischen der Schwenkachse des Deckels und dessen Frontfläche ein nicht unwesentlicher Abstand besteht. Das bedeutet, dass die bisher übliche Anordnung eines Fahrtschreibers im Armaturenbrett derart, dass das Scharnier bzw. die Schwenkachse des Deckels in oder wenig über der Armaturenbrettebene bzw. den umgebenden frontseitigen Armaturenbrettkonturen liegt, bei der angestrebten Armaturenbrettgestaltung nicht mehr möglich ist. Abgesehen davon, dass der Fahrtschreiber selbst eine Abschlusskante des Armaturenbrettes bilden kann und sich für diesen Fall des Problem nicht stellt, macht, um den Deckel mit dem für das Wechseln der Diagrammscheiben erforderlichen Schwenkwinkel öffnen zu können, dieser sozusagen «versenkte» Einbau des Fahrtschreibers einen entsprechenden, in jedem Falle grösseren Ausschnitt im Armaturenbrett erforderlich, als er bisher dem Gehäusequerschnitt entsprechend für die Aufnahme des Fahrtschreibers notwendig war. Bei geschlossenem Deckel ist dieser Ausschnitt nicht ganz verdeckt, es bleibt zwischen dem Fahrtschreiber und der einen der Schwenkachse parallelen Ausschnittbegrenzung bzw. Ausschnittkante am Armaturenbrett ein dem teilweisen Eintauchen des Deckels dienender Spalt, der sich beispielsweise in einfacher Weise dadurch überbrücken liesse, dass die Frontplatte des Deckels entsprechend verlängert ausgebildet werden würde. Dadurch wäre aber der Nachteil in Kauf zu nehmen, dass ein derart ausgerüsteter Fahrtschreiber nicht mehr universell einbaufähig wäre, also weder in herkömmlicher Weise aufgesetzt eingebaut werden könnte, noch an verschiedene Armaturenbrettkonturen bzw. unterschiedliche Armaturenbrettausschnitte anpassbar wäre.

Ziel der vorliegenden Erfindung war es daher, eine Anordnung zu treffen, die mit geringem Aufwand eine grössere Flexibilität bei der Anpassung eines Fahrtschreibers an unterschiedliche Einbaugegebenheiten im Armaturenbrett und somit mehr designerische Freiheit in der Gestaltung eines Armaturenbrettes erlaubt.

Die Lösung dieser Aufgabe sieht vor, dass dem Fahrtschreiber eine dessen rechteckförmige Frontfläche in eine Richtung erweiternde Blende zugeordnet ist und dass die Blende mit dem Deckel des Fahrtschreibers lösbar verbindbar ist.

Eine bevorzugte Ausführungsvariante sieht vor, dass die Frontfläche des Deckels und die Frontfläche der Blende in der gleichen Ebene liegen.

Vorteilhafte Varianten lassen sich ferner dadurch erzielen, dass die Frontfläche des Deckels und die Frontfläche der Blende nicht in die gleiche Richtung weisen.

Der Vorteil, den die Erfindung bietet, ist insbesondere darin zu sehen, dass ein Fahrtschreiber, ohne dass die vorgeschlagene Blende benutzt wird, in der herkömmlichen Weise im Armaturenbrett eingebaut werden kann, dass dieser Fahrtschreiber andererseits aber auch «versenkt» angeordnet werden kann, wobei mit minimalem Fertigungs- und Montageaufwand der zum Öffnen des Deckels erforderliche Eintauchspalt verblendbar ist, indem eine passende Blende, beispielsweise mittels einer geeigneten Rast-, Steck- oder Schraubverbindung, mit dem Deckel des Fahrtschreibers verbindbar ist. Von Vorteil ist ferner, dass diese Blende hinsichtlich ihrer äusseren Form und Oberflächengestaltung als Element des Armaturenbretts ausgebildet werden kann und somit die stilistische Gestaltungsfreiheit im Umfeld des Fahrtschreibers nicht beeinträchtigt ist.

Im folgenden sei die Erfindung anhand der beigefügten Zeichnungen näher erläutert:

Es zeigen:

Fig. 1 eine Frontansicht eines Fahrtschreibers zusammen mit den umgebenden Armaturenbrettkonturen,

Fig. 2 einen Schnitt durch das Armaturenbrett gemäss der Schnittlinie in Fig. 1 mit einer Seitenansicht des Fahrtschreibers,

Fig. 3, 4, 5 und 6 verschiedene Ausführungsvarianten der Blende zur Anpassung des Fahrtschreibers an unterschiedliche Armaturenbrettkonturen, insbesondere hinsichtlich der schwenkachsparallelen Begrenzung des dem Eintauchen des Deckels dienenden Spalts zwischen dem Fahrtschreiber und dem Armaturenbrett.

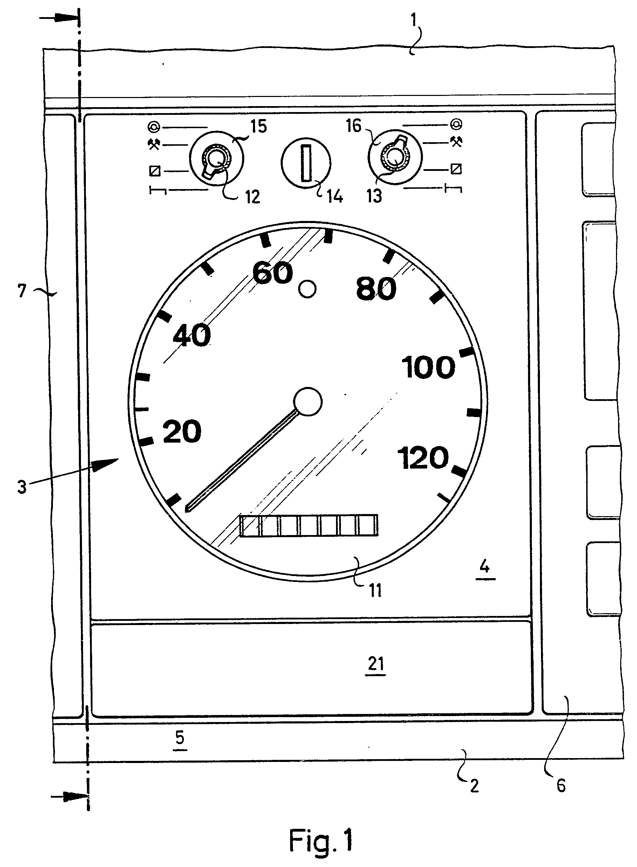

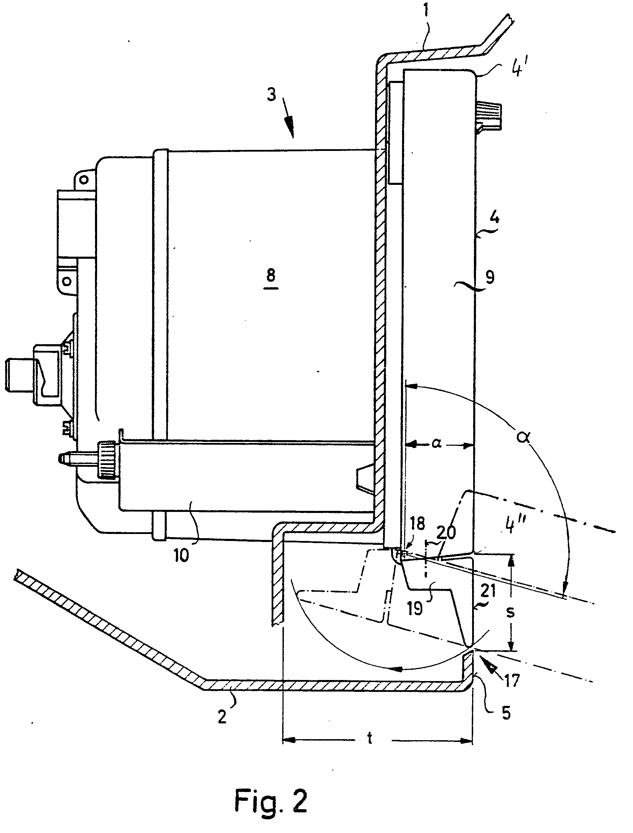

Gemäss den Fig. 1 und 2 ist in einem geeigneten Armaturenbrett, das der Einfachheit halbr aus im einzelnen nicht näher gezeigten Blechteilen 1 und 2 aufgebaut dargestellt ist, ein Fahrtschreiber 3 angeordnet, und zwar derart, dass sich seine Frontfläche 4 und wenigstens ein Teil 5 der frontseitigen Konturen des Armaturenbretts im wesentlichen in einer Ebene befinden. Ebenso sind dem Fahrtschreiber 3 benachbarte Instrumentenfrontflächen 6 und 7 gleichflächig mit der Frontfläche 4 und der Armaturenbrettfläche 5 angeordnet, so dass sich ein einheitlich ebenflächiges Gesamtbild hinsichtlich der Fahrzeuginstrumentierung ergibt. Dabei kann der Fahrtschreiber bzw. dessen mit dem Gehäuse 8 gelenkig verbundener Deckel 9 mit einer rechteckförmigen Frontplatte versehen oder als quaderförmiger Körper ausgebildet sein, während das Gehäuse 8 in der üblichen Weise als im wesentlichen zylindrischer Körper ausbildbar ist. In diesem Zusammenhang sei ferner lediglich angedeutet, dass die Befestigung des Fahrtschreibers 3 in an sich bekannter Weise, nämlich durch Einsetzen des Gehäuses 8 in eine geeignete Öffnung in dem einen Armaturenbretteil 1 und durch Verspannen mit diesem Armaturenbretteil mittels geeigneter Spannelemente, von denen in Fig. 2 eines — 10 — dargestellt ist, erfolgt. Der Vollständigkeit halber sei ferner erwähnt, dass der Fahrtschreiber 3, falls er nicht als reines Registriergerät ausgebildet ist, an seiner Frontseite ein Fenster 11 aufweist, durch welches im einzelnen nicht näher bezeichnete Anzeigelemente für die gefahrenen Geschwindigkeiten und die zurückgelegten Strecken evtl. auch die Uhrzeit beobachtbar sind. Einstellknöpfe 12 und 13 für die Vorwahl der Art der Arbeitszeitregistrierung sowie ein Schloss 14 gehören bekanntlich ebenfalls zur Standardausrüstung eines Fahrtschreibers. Dabei ragen die im Gehäuse gelagerten und nicht dargestellten Einstellwellen, an denen die Einstellknöpfe 12 und 13 befestigt sind, durch geeignete Öffnungen im Deckel 9, wenn dieser geschlossen ist, hindurch. Diese für die Bewegung des Deckels 9 erforderlichen, relativ grossen Öffnungen sind durch in der Ebene der Frontfläche 4 liegende, den Einstellwellen bzw. Einstellknöpfen 12 und 13 zugeordnete Blenden 15 und 16 verschlossen.

Wie insbesondere aus Fig. 2 näher ersichtlich ist, muss bei dem gewählten und bereits eingangs erläuterten «versenkten» Einbau des Fahrtschreibers 3 zwischen dem Fahrtschreiber 3 bzw. dessen schwenkachsparallelen Deckelbegrenzung und der achsparallelen Begrenzung des für den Einbau des Fahrtschreibers erforderlichen Armaturenbrettausschnitts — in Fig. 2 schliesst der Ausschnitt mit einer Begrengungskante 17 ab — ein das Aufschwenken des Deckels 9 um dessen Schwenkachse 18 und das Eintauchen des Deckels 9 unter eine durch die Frontfläche 4 gegebene Ebene ermöglichender Spalt mit einer Breite s und einer Tiefe t vorgesehen sein. Der von s abhängige Schwenkwinkel $\alpha$ sollte dabei, um ein bequems Wechseln der an der Innenseite des Deckels angeordneten Diagrammscheibe vornehmen zu können, im allgemeinen grösser sein als 90°.

Es ist nun naheliegend, dass dieser Spalt im geschlossenen Zustand des Deckels in geeigneter Weise abzudecken ist. Hierzu ist, wie Fig. 2 zeigt, ein als Blende dienender Körper 19 vorgesehen, der mit dem Deckel 9, beispielsweise durch Verschrauben, was durch die strichpunktierte Linie 20 angedeutet sein soll, verbindbar ist.

Dabei ist gemäss dem in Fig. 1 und 2 gezeigten Ausführungsbeispiel die Anordnung der Blende 19 derart gewählt, dass ihre Frontfläche 21 in der gleichen Ebene liegt wie die Frontflächen des Deckels 4 der Armaturenbrettpartie 5 und der angrenzenden Instrumentenfelder 6 und 7.

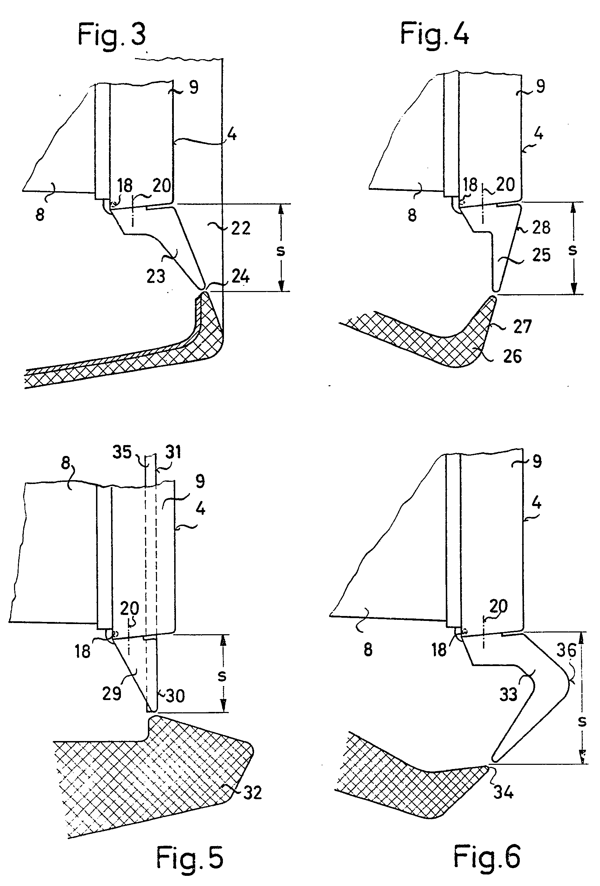

Die in Fig. 3 gezeigte Anordnung weist ebenfalls in einer durch die Frontfläche 4 des Fahrtschreibers 3 bestimmten Ebene liegende Instrumentenfrontflächen bzw. Instrumentenblenden auf, jedoch ist diese Ebene gegenüber einem Armaturenbrettrahmen 22 vertieft angeordnet. Durch die besondere Form einer wiederum mit dem Deckel 9 lösbar verbindbaren Blende 23 wird auch in diesem Falle der Eintauchspalt s verblendet und der Lageunterschied zwischen der Begrenzungskante 24 des Armaturenbrettrahmens 22 und der Frontfläche des Deckels 9 ausgeglichen.

Eine ähnliche Anordnung zeigt Fig. 4, wobei mit einer besonderen Blende 25 der Lageunterschied eines Armaturenbrettrahmens 26 und der erhöht liegenden und durch die Frontfläche 4 des Fahrtschreibers gekennzeichneten Instrumentenfrontebene in gefälliger Weise ausgleichbar ist. Bei diesem Anordnungsbeispiel liegen die Frontfläche 27 des Armaturenbrettrahmens 26 und die Fläche 28 der Blende zwar in einer Ebene, weisen aber nicht in die gleiche Richtung wie die Frontfläche 4 am Deckel 9 des Fahrtschreibers 3. Im übrigen ist in der Verlängerung der Flächen 27 und 28 beispielsweise die Anordnung von Betätigungsorganen oder Signalelementen denkbar.

Eine wiederum andere Gesaltung zeigt eine in der Fig. 5 dargestellte Blende 29, mit der die Abdeckung des Eintauchspalts s bzw. die Frontfläche 30 der Blende 29 in eine Ebene gelegt wird, die einer Armaturenbrettfrontfläche 31 entspricht, aus der der Deckel 9 des Fahrtschreibers 3 teilweise herausragt. Mit 35 ist in dieser Figur ein Instrumententräger bzw. das eigentliche Armaturenbrett angedeutet, während 32 eine dem Armaturenbrett zugeordnete und einen sowohl ästhetischen als auch funktionellen Abschluss bildende gepolsterte Leiste bildet bzw. einen gepolsterten Rahmen darstellt.

Aus der Fig. 6 ist ersichtlich, dass die erfindungsgemässe Blende auch derart gestaltet sein kann, dass mit ihr ein dem Armaturenbrett parallellaufender Knick 36 nachgebildet bzw. ergänzt werden kann und somit mittels einer entsprechenden Blende 33 sowohl ein Abdecken des Eintauchspalts zwischen dem Deckel 9 und der Ausschnittkante 34 des Armaturenbretts bzw. eines dieses umkränzenden Rahmens als auch eine Erweiterung zumindest jedoch keine Einschränkung der Gestaltungsmöglichkeit des Armaturenbretts erzielbar ist. Dabei bleibt der Fahrtschreiber in jedem der beschriebenen Fälle wahlweise auch für eine «aufgesetzte» Einbauweise, wie sie bisher üblich war, verwendbar.

**Patentansprüche**

1. Fahrtschreiber für Kraftfahrzeuge mit einem Gehäuse (8) und einem mit diesem gelenkig verbundenen Deckel (9), an welchem frontseitig eine im wesentlichen rechteckförmige Frontplatte ausgebildet ist und wobei die Schwenkachse (18) des Deckels (9) im Abstand (a) von der Frontfläche (4) der Frontplatte, und zwar parallel zu einem (4, 4") der Kantenpaare der Frontfläche (4), angeordnet ist, sowie mit Mitteln, die einen versenkten Einbau des Fahrtschreibers (3) im Armaturenbrett (1, 2) eines Kraftfahrzeuges derart gestatten, dass sich die den Fahrtschreiber (3) umgebenden frontseitigen Armaturenbrettkonturen (5) bzw. Instrumentenfrontflächen (6, 7) ausserhalb einer Ebene befinden, deren Lage parallel zur Frontfläche (4) des Fahrtschreibers (3) durch die Schwenkachse (18) bestimmt ist, dadurch gekennzeichnet, dass dem Fahrtschreiber (3) eine dessen rechteckförmige Frontfläche (4) in eine Richtung erweiternde Blende (z.B. 19) zugeordnet ist und dass die Blende (19) mit dem Deckel (9) des Fahrtschreibers (3) lösbar verbindbar ist.

2. Fahrtschreiber nach Anspruch 1, dadurch gekennzeichnet, dass die Frontfläche (4) des Deckels (9) und die Frontfläche (21) der Blende (19) in der gleichen Ebene liegen.

3. Fahrtschreiber nach Anspruch 1, dadurch gekennzeichnet, dass die Frontfläche (4) des Deckels (9) und die Frontfläche der Blende (z.B. 23 oder 25) nicht in die gleiche Richtung weisen.

**Claims**

1. Tachograph for vehicles having a housing (8) an a lid (9) pivotally connected thereto which lid is provided at its front face with an essentially rectangular front plate the pivotal axis (18) of the lid (9) being arranged at a distance (a) from the front face (4) of the front plate parallelly to one (4', 4") of the pairs of edges of the front face (4), and having means allowing for a sunk mounting of the tachograph (3) in the dash board (1, 2) of a vehicle so that the dash board contours (5) respectively the front faces (6, 7) of the instruments surrounding the tachograph (3) at its front side are outside a plane running through the pivotal axis (18) and parallel to the front face (4) of the tachograph (3) characterized in that there is a blind (for instance 19) enlarging the rectangular front face (4) of the tachograph (3) in one direction and that the blind (19) is releasably connectable to the lid (9) of the tachograph (3).

2. Tachograph according to Claim 1, characterized in that the front face (4) of the lid (9) and the front face (21) of the blind (19) are in the same plane.

3. Tachograph according to Claim 1, characterized in that the front face (4) of the lid (9) and the front face of the blind (for instance 23 or 25) do not point into the same direction.

**Revendications**

1. Enregistreur de route destiné aux véhicules automobiles et équipé d'un boîtier (8) ainsi que, articulé sur ce dernier, d'un capot (9) sur lequel est formé à l'avant une plaque frontale pour l'essentiel rectangulaire et dont l'axe de pivotement (18) est disposé à une distance (a) de la surface frontale (4) de la plaque frontale et cela parallélement à l'une (4', 4") des paires de bords de la surface frontale (4), ainsi que de moyens permettant un montage encastré de l'enregistreur de route (3) au tableau de bord (1, 2) d'un véhicule automobile, de telle sorte que les contours frontaux (5) ou les surfaces frontales (6, 7) des instruments entourant l'enregistreur de route (3) soient situés à l'extérieur d'un plan dont la position parallèle par rapport à la surface frontale (4) de l'enregistreur de route (3) est déterminée par l'axe de pivotement (18), caractérisé par le fait, qu'à l'enregistreur de route (3) est affecté un cache (par exemple 19) étendant la surface frontale (4) rectangulaire de ce dernier dans une direction et que ce cache (19) peut être assemblé de façon amovible avec le capot (9) de l'enregistreur de route (3).

2. Enregistreur de route selon la revendication 1, caractérisé par le fait, que la surface frontale (4) du capot (9) et la surface frontale (21) du chache (19) sont situées dans le même plan.

3. Enregistreur de route selon la revendication 1, caractérisé par le fait, que la surface frontale (4) du capot (9) et la surface frontale du cache (par exemple 23 ou 25) ne sont pas orientées dans la même direction.

Fig. 1

Fig. 2

## Fig. 3

## Fig. 4

## Fig. 5

## Fig. 6

9